# EUROPÄISCHE PATENTANMELDUNG

(11) **EP 1 808 686 A1**
(43) Veröffentlichungstag der Anmeldung: **18.07.2007**
(21) Anmeldenummer: 07000593.9
(22) Anmeldetag: 12.01.2007
(51) Int. Cl.: G01M 17/02, G01B 11/16, G01B 11/30, G01N 21/954

(54) **Prüfgerät für hohle Objekte**

(30) Priorität: 13.01.2006 DE 102006001848
(71) Anmelder: Steinbichler Optotechnik GmbH, 83115 Neubeuern (DE)
(72) Erfinder: Engelsberger, Josef, 83075 Bad Feilnbach (DE); Wilhelm, Robert, D-83098 Brannenburg (DE); Leitner, Bernd, 83115 Neubeuern (DE); Berger, Roman, 83530 Schnaitsee (DE); Rasenberger, Volker, 83064 Raubling (DE); Huber, Rainer, 83451 Piding (DE); Steinbichler, Marcus, Dr., 83115 Neubeuern (DE)
(74) Vertreter: Zinnecker, Armin

(57) **Zusammenfassung**

Ein Prüfgerät dient zum Prüfen von hohlen Prüfobjekten, insbesondere Reifen (1). Das Prüfobjekt umfaßt einen Verschluß (2, 9) für jede Öffnung (5, 8) des Prüfobjekts (1) und eine Prüfanordnung (15, 16, 17, 18) im Inneren des Prüfobjekts (1) zum Prüfen des Prüfobjekts (Fig. 1).

## Beschreibung

Die Erfindung betrifft ein Prüfgerät für hohle Prüfobjekte, insbesondere Reifen, Rohre, Tanks oder ähnliches.

Aus der DE 199 44 314 A1 ist ein Prüfgerät für Reifen bekannt, bei dem der Reifen in eine Vakuumkammer eingelegt wird. Fehlstellen des Reifens, in denen sich Luft befindet, dehnen sich aus und treten hervor, so daß sie durch eine Meßanordnung erfaßt werden können. Bei der Meßanordnung handelt es sich insbesondere um eine Laser-Meßanordnung. Sie kann einen oder mehrere Meßköpfe, insbesondere Laser-Meßköpfe, umfassen. Ein Meßkopf kann eine oder mehrere Beleuchtungsquellen und/oder eine oder mehrere Beobachtungseinheiten umfassen.

Zur Prüfung von Reifen mittels Verformungsmessung bei Unterdruckbelastung nach der DE 199 44 314 A1 wird eine Vakuumkammer benötigt, in der der Reifen einer Druckabsenkung ausgesetzt wird. Die Größe des Reifens oder des sonstigen Prüfobjekts bestimmt dabei die Größe der Vakuumkammer. Darüber hinaus muß der Reifen oder das sonstige Prüfobjekt in die Vakuumkammer befördert werden, um die Prüfung durchführen zu können, und anschließend wieder aus der Vakuumkammer entfernt werden. Sowohl die Vakuumkammer als auch deren Beschickung stellen einen erheblichen technischen Aufwand dar, der umso größer wird, je grö-βer die Reifen oder sonstigen Prüfobjekte sind. Insbesondere die Prüfung von Reifen für Erdbewegungsgeräte mit Durchmessern von bis zu 5 m ist daher nur in gewaltig dimensionierten Maschinen durchführbar.

Andere hohle Prüfobjekte bzw. Hohlkörper wie beispielsweise Rohre oder Tanks können ebenfalls durch Unterdruckbelastung oder Überdruckbelastung geprüft werden. Dabei ist es möglich, derartige Prüfungen von außen durchzuführen, wobei das gesamte Rohr oder der gesamte Tank mit Druck beaufschlagt wird. Fehlstellen im Inneren des Rohres oder Tanks oder sonstigen hohlen Prüfobjekts können dabei allerdings oft nicht nachgewiesen werden, weil sie sich nach außen nicht ausprägen.

Hiervon ausgehend liegt der Erfindung die Aufgabe zugrunde, ein verbessertes Prüfgerät für hohle Prüfobjekte, insbesondere Reifen, Rohre oder Tanks, vorzuschlagen.

Erfindungsgemäß wird diese Aufgabe durch die Merkmale des Anspruchs 1 gelöst. Vorteilhafte Weiterbildungen sind in den Unteransprüchen beschrieben.

Das Prüfgerät umfaßt einen Verschluß für jede Öffnung des Prüfobjekts und eine Prüfanordnung im Inneren des Prüfobjekts zum Prüfen des Prüfobjekts. Der Verschluß dient zum Verschließen der jeweiligen Öffnung des Prüfobjekts. Er kann sich in der Öffnung des Prüfobjekts befinden. Er kann allerdings auch im Abstand von der Öffnung des Prüfobjekts angeordnet sein. Die Prüfanordnung dient insbesondere zum Prüfen der inneren Oberfläche des Prüfobjekts. Die Prüfung kann durch eine Erfassung oder Messung der inneren Oberfläche des Prüfobjekts erfolgen.

Falls erforderlich können Teile der Meßanordnung und/oder der Anschlußleitungen für die Meßanordnung durch den Verschluß geführt werden. Durch die Anschlußleitungen können Energie (insbesondere elektrische Energie, pneumatische Energie, hydraulische Energie) zur Meßanordnung geleitet werden und/oder Daten und/oder Steuersignale zu der Meßanordnung und von dieser nach außen geleitet werden.

Die Anschlußleitungen sind vorzugsweise luftdicht abgedichtet durch den Verschluß geführt.

Vorteilhaft ist es, wenn der Verschluß oder mindestens ein Verschluß eine Durchführung aufweist. Bei der Durchführung kann es sich insbesondere um eine Druckdurchführung handeln, die zur Erzeugung von Überdruck oder Unterdruck in dem verschlossenen bzw. abgedichteten Prüfobjekt dient. Es ist allerdings auch möglich, das verschlossene bzw. abgedichtete Prüfobjekt stattdessen oder zusätzlich durch eine oder mehrere weitere Belastungsmethoden zu belasten. Insbesondere kann das verschlossene bzw. abgedichtete Prüfobjekt thermisch und/oder mechanisch und/oder durch Schwingungen belastet werden. Dementsprechend kann das Prüfgerät eine Vorrichtung zum Aufbringen einer oder mehrerer derartiger Belastungen aufweisen.

Vorteilhaft ist es, wenn eine oder mehrere oder alle Prüfanordnungen eine Beobachtungseinheit und/oder Beleuchtungseinheit aufweisen.

Nach einer weiteren vorteilhaften Weiterbildung weisen der oder einer oder mehrere oder alle Verschlüsse einen umlaufenden Expansionskörper auf, beispielsweise einen Schlauch oder Gewebeschlauch. Durch eine Expansion des Expansionskörpers kann der Verschluß gegenüber dem Prüfobjekt abgedichtet werden.

Vorteilhaft ist es, wenn der oder einer oder mehrere oder alle Verschlüsse in die Öffnung bzw. Öffnungen eines Reifens einsetzbar sind. Bei dem Reifen kann es sich um einen Fahrzeugreifen, Kfz-Reifen, PKW-Reifen, LKW-Reifen oder sonstigen Reifen handeln.

Nach einer weiteren vorteilhaften Weiterbildung sind der oder einer oder mehrere oder alle Verschlüsse, vorzugsweise zwei Verschlüsse, durch eine oder mehrere starre Verbindungen miteinander verbindbar oder verbunden. Dies ist insbesondere dann vorteilhaft, wenn die Verschlüsse in die Öffnungen eines Reifens einsetzbar sind. Die starren Verbindungen können von Klammern oder Bolzen gebildet werden. Vorteilhaft ist es, wenn der Abstand der durch eine starre Verbindung miteinander verbundenen Verschlüsse veränderbar ist. Insbesondere ist es vorteilhaft, wenn die Verschlüsse aufspreizbar oder auseinanderspreizbar sind.

Eine weitere vorteilhafte Weiterbildung ist dadurch gekennzeichnet, daß der oder einer oder mehrere oder alle Verschlüsse verschiedene Umfänge bzw. Durchmesser aufweisen. Hierdurch ist es möglich, den Verschluß für verschiedene Umfangsformen bzw. Durchmesser der Öffnung eines Reifens oder sonstigen Prüfobjekts zu verwenden.

Nach einer weiteren vorteilhaften Weiterbildung ist der Umfang bzw. Durchmesser des oder eines oder mehrerer oder aller Verschlüsse veränderbar. Hierdurch kann der Verschluß an verschiedene Umfangsformen oder Durchmesser der Öffnung des Reifens oder sonstigen Prüfobjekts angepaßt werden.

Nach einer weiteren vorteilhaften Weiterbildung sind die oder eine oder mehrere oder alle Prüfanordnungen in dem Prüfobjekt positionierbar. Beispielsweise können die Prüfanordnungen um eine oder zwei oder drei Achsen drehbar und/oder in einer oder zwei oder drei Richtungen verschiebbar sein. Vorteilhaft ist es, wenn die Prüfanordnungen während der Prüfphase positionierbar sind.

Eine weitere vorteilhafte Weiterbildung ist dadurch gekennzeichnet, daß die Prüfanordnungen durch einen Positionierer positionierbar sind, insbesondere durch einen Roboter oder einen Roboterarm.

Eine weitere vorteilhafte Weiterbildung ist gekennzeichnet durch eine an dem oder einem oder mehreren oder allen Verschlüssen angreifende Hebevorrichtung. Die Hebevorrichtung dient insbesondere zum Abheben des Prüfobjekts vom Boden. Als Hebevorrichtung sind insbesondere Gabelstapler oder Roboter geeignet.

Eine weitere vorteilhafte Weiterbildung ist gekennzeichnet durch eine oder mehrere Prüfanordnungen außerhalb des Prüfobjekts.

Ausführungsbeispiele der Erfindung werden nachstehend anhand der beigefügten Zeichnung im einzelnen erläutert. In der Zeichnung zeigt
- Fig. 1: einen Reifen mit zwei Verschlüssen und mehreren Prüfanordnungen in einem Querschnitt,
- Fig. 2: einen Reifen mit zwei Verschlüssen, die durch starre Verbindungen miteinander verbunden sind, in einem Querschnitt,
- Fig. 3: das Detail "A" aus Fig. 1 und 2,
- Fig. 4: einen Reifen mit einer Prüfvorrichtung nach Art einer Stufenfelge in einem Querschnitt,
- Fig. 5: eine Prüfvorrichtung nach Art einer Expansionsfelge in einer Ansicht von vorne,
- Fig. 6: einen Abschnitt eines Rohres mit zwei Verschlüssen in einem Querschnitt,
- Fig. 7: das Detail "B" aus Fig. 6,
- Fig. 8: eine Hebevorrichtung mit einem Reifen in einer Seitenansicht,
- Fig. 9: eine von einem Gabelstapler gebildete Hebevorrichtung mit einem Reifen in einer Seitenansicht, teilweise im Schnitt,
- Fig. 10: eine Abwandlung der Hebevorrichtung nach Fig. 9,
- Fig. 11: einen Reifen mit einer Prüfvorrichtung, die einen Positionierer umfaßt, in einem Querschnitt,
- Fig. 12: eine Shearographie-Prüfanordnung mit einem Keil in einer schematischen Ansicht,
- Fig. 13: eine Shearographie-Prüfanordnung mit Biprisma in einer schematischen Ansicht,
- Fig. 14: eine Shearographie-Anordnung mit Interferometer in einer schematischen Ansicht,
- Fig. 15: eine Abwandlung der Anordnung nach Fig. 14 mit Zwischenabbildung (Linsensystem),
- Fig. 16: eine Abwandlung der Anordnung nach Fig. 14 und 15 mit Zwischenabbildung (Spiegelsystem),
- Fig. 17: eine ESPI-Prüfanordnung in einer schematischen Ansicht und
- Fig. 18: eine Prüfanordnung nach dem Prinzip der LaserTriangulation in einer schematischen Ansicht.

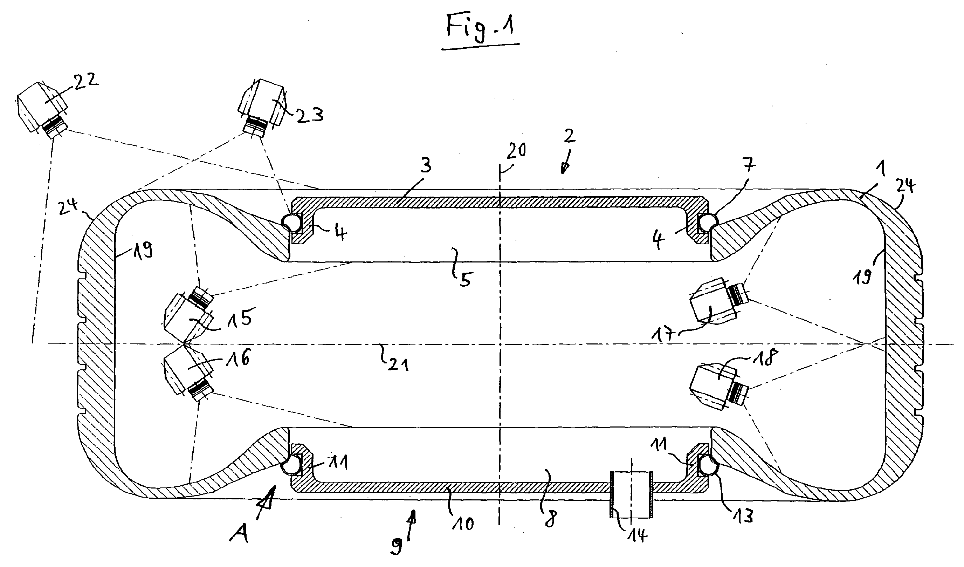

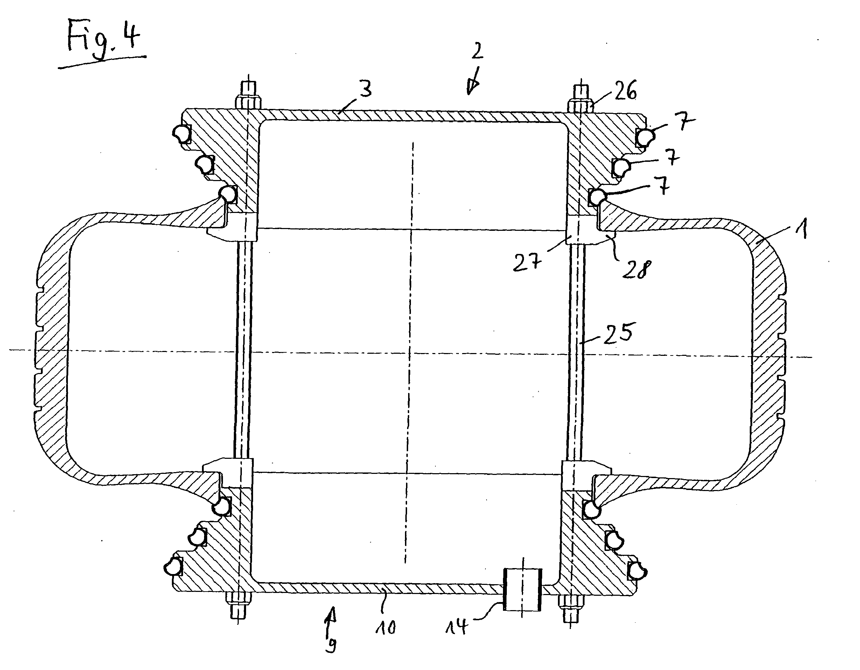

Der in Fig. 1 gezeigte Reifen 1 ist nicht auf einer Felge montiert. In die obere Öffnung des Reifens 1 ist ein oberer Verschluß 2 eingesetzt, der einen plattenförmigen Teil 3 und einen umlaufenden Flansch 4 aufweist, der zur oberen Öffnung 5 des Reifens 1 hin gerichtet ist. Der umlaufende Flansch 4 verläuft im wesentlichen senkrecht zum plattenförmigen Teil 3. An seiner Außenseite ist eine umlaufende Nut 6 (Fig. 3) vorgesehen, in der sich ein umlaufender Expansionskörper 7 befindet, beispielsweise ein Gewebeschlauch oder sonstiger Schlauch.

In die untere Öffnung 8 des Reifens 1 ist ein unterer Verschluß 9 eingesetzt, der ebenfalls einen plattenförmigen Teil 10 aufweist, an dessen Rand ebenfalls ein zum Reifen 1 hin gerichteter, im wesentlichen senkrecht zum plattenförmigen Teil 10 verlaufender, umlaufender Flansch 11 vorgesehen ist. In der äußeren Umfangsfläche des umlaufenden Flansches 11 ist ebenfalls eine umlaufende Nut 12 vorgesehen, in der sich ein umlaufender Expansionskörper 13 befindet. Der unter Verschluß 9 weist darüber hinaus noch eine in dem plattenförmigen Teil 3 vorgesehene Durchführung 14 auf. Die Durchführung 14 ist als Druckdurchführung ausgestaltet. Sie ist mit dem plattenförmigen Teil 9 luftdicht verbunden, beispielsweise verschweißt. Durch die Druckdurchführung 14 kann in den Hohlraum, der von dem Reifen 1 und den Verschlüssen 2 und 9 gebildet wird, ein Unterdruck oder ein Überdruck eingebracht werden. Ferner können Leitungen durch die Durchführung 14 geführt werden.

Innerhalb des Hohlraums, der von dem Reifen 1 und den Verschlüssen 2, 9 gebildet wird, befinden sich vier Prüfanordnungen 15, 16, 17, 18, die jeweils als Laser-Meßkopf ausgebildet sind. Jeder Meßkopf 15-18 umfaßt eine Beleuchtungseinrichtung und eine Aufnahmeeinrichtung einschließlich einer Aufnahmeoptik. Die Aufnahmewinkel sind durch strichpunktierte Linien dargestellt. Die Meßköpfe 15 - 18 sind schwenkbar. Sie können darüber hinaus verschiebbar sein. Ferner sind die Meßköpfe 15 - 18 innerhalb des Reifens 1 angeordnet, also im Bereich des Randes der Öffnungen 5, 8 oder außerhalb des Bereichs der Öffnungen 5, 8. Sie sind derart angeordnet, daß jeweils ein Meßkopf 15-18 eine Hälfte der Innenfläche 19 des Reifens 1 überstreichen kann. Da die Meßköpfe 15, 16 und 17, 18 bezüglich der Reifen-Hochachse 20 um 180° versetzt sind, kann die gesamte Innenfläche des Reifens 1 geprüft werden, wenn der Reifen 1 um die Reifen-Hochachse 20 um 180° gedreht wird. Dabei überstreichen die Meßköpfe 15 und 17 die bezüglich der Reifen-Querachse 21 obere Hälfte der Innenfläche 19 und die Meßköpfe 16 und 18 die zugehörige untere Hälfte.

Das Prüfgerät umfaßt ferner zwei weitere Meßköpfe 22, 23, die sich außerhalb des Reifens 1 befinden und durch die die Außenfläche 24 des Reifens 1 geprüft werden kann. Zusätzlich zu den Meßköpfen 22, 23 können weitere, bezüglich der Reifen-Hochachse 20 um 180° versetzte Meßköpfe vorgesehen sein (in Fig. 1 nicht dargestellt). Ferner ist es möglich, weitere Meßköpfe in einem bezüglich der Reifen-Hochachse 20 geringeren Umfangswinkelabstand vorzusehen, um die vollständige Prüfung des Reifens 1 sowohl innen als auch außen mit einer Drehung um einen geringeren Winkel um die Reifen-Hochachse 20 durchzuführen.

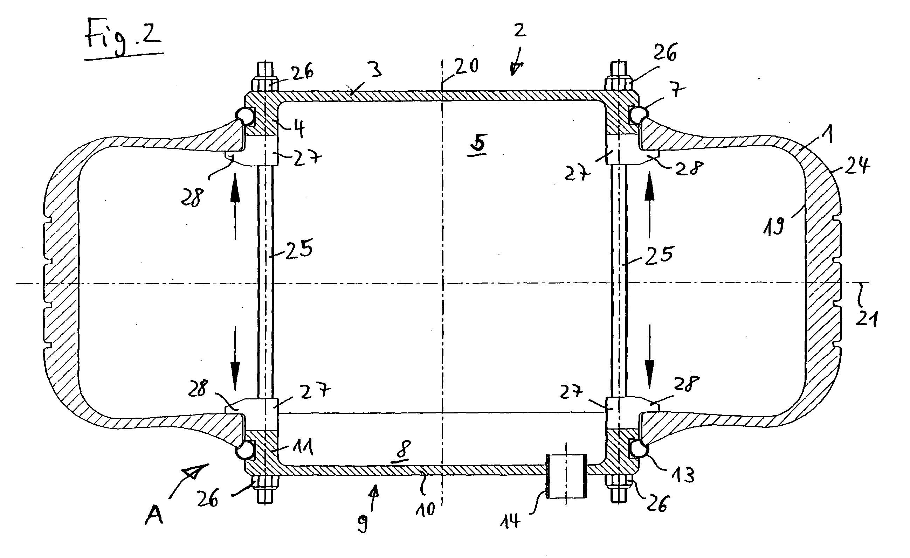

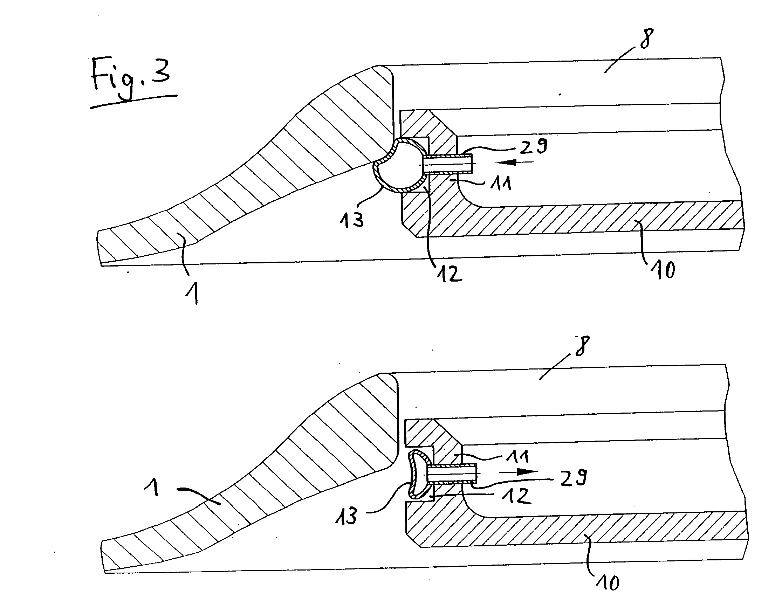

Bei der abgewandelten Ausführungsform nach Fig. 2, bei der entsprechende Teile mit denselben Bezugszeichen versehen sind, sind die Verschlüsse 2 durch eine starre Verbindung miteinander verbunden, die aus mehreren Gewindebolzen 25 besteht. Die Gewindebolzen 25 laufen durch die umlaufenden Flansche 4, 11 der Verschlüsse 2, 9. Sie weisen an ihren Enden jeweils eine Gewindemutter 26 auf, durch die die Verschlüsse 2, 9 gegeneinander verspannbar sind. An den Innenseiten der umlaufenden Flansche 4, 11 liegen jeweils Klammern 27 an, deren nach außen weisende Schultern 28 den Reifen 1 im Bereich der Öffnungen 5, 8 untergreifen. Die Gewindebolzen 25 können gegenläufige Gewinde aufweisen, so daß durch eine Drehung des jeweiligen Gewindebolzens 25 die zugehörigen Gewindemuttern 26 und auch die Klammern 27 voneinander weg oder aufeinander zu bewegt werden. Hierdurch ist es insbesondere möglich, den Reifen 1 aufzuspreizen. Hierdurch können die Prüfungen bzw. Messungen erleichtert werden.

Die Expansionskörper 7, 13 stehen in der aus Fig. 3 ersichtlichen Weise mit einem Anschlußstutzen 29 in Verbindung, der den zugehörigen umlaufenden Flansch 4, 11 durchdringt und an den eine Druckquelle anschließbar ist.

Im Betrieb werden die Verschlüsse 2, 9 in die Öffnungen 5, 8 des Reifens 1 eingesetzt. Dabei sind die Expansionskörper 7, 13 zunächst drucklos, wie in der unteren Abbildung von Fig. 3 gezeigt. Wenn sich die Verschlüsse 2, 9 in der richtigen Position befinden, werden die Expansionskörper 7, 13 durch die Anschlußstutzen 29 mit Druckluft versorgt, so daß die Expansionskörper 7, 13 die in der oberen Abbildung der Fig. 3 gezeigte Lage einnehmen, in der sie etwa zur Hälfte aus der Nut 6, 12 herausragen und mit einem Teil dichtend an der benachbarten Schulter des Reifens 1 anliegen.

Fig. 4 zeigt eine Abwandlung des Prüfgeräts nach Fig. 2, bei der entsprechende Teile mit denselben Bezugszeichen versehen sind. Bei der Ausführungsform nach Fig. 4 weisen die Verschlüsse 2, 9 verschiedene Durchmesser auf. Jeder Verschluß 2, 9 weist drei verschiedene Durchmesser auf. Die verschiedenen Durchmesser sind stufenförmig angeordnet. Dementsprechend weisen die Verschlüsse 2, 9 jeweils drei Stufen auf. Die inneren Stufen haben den kleinsten Durchmesser, die mittleren Stufen einen mittleren Durchmesser und die äußeren Stufen den größten Durchmesser. Die Stufen der Verschlüsse 2, 9 sind einander zugewandt. Sie weisen jeweils eine Nut mit einem Expansionskörper 7 auf. Hierdurch können die Verschlüsse 2, 9 für verschiedene Durchmesser der Öffnungen 5, 8 des Reifens 1 verwendet werden. Die Vorrichtung nach Fig. 4 ist nach Art einer Stufenfelge ausgebildet.

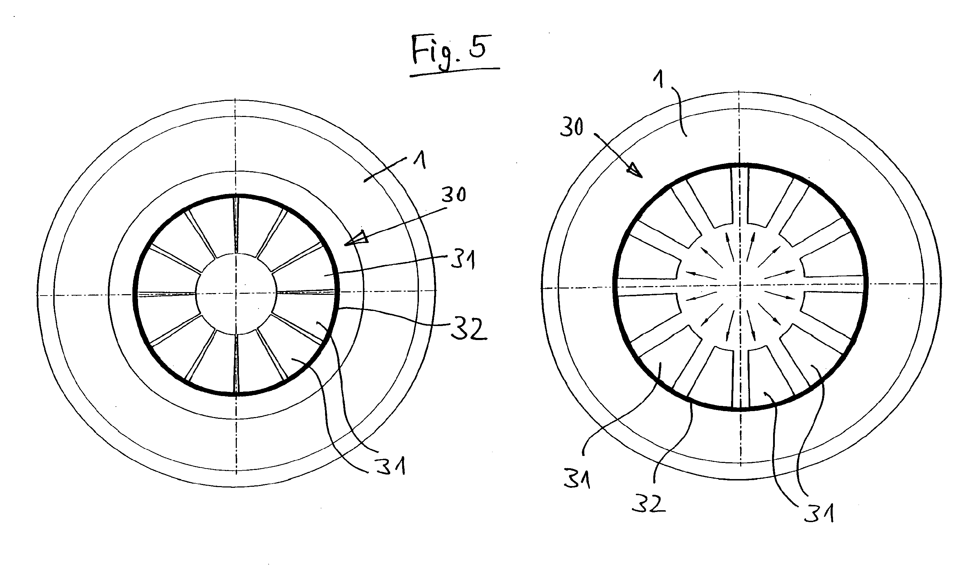

Fig. 5 zeigt einen Verschluß 30, dessen Durchmesser veränderbar ist. Der Verschluß 30 weist eine Vielzahl von sternförmig angeordneten, keilförmigen Segmenten 31 auf, die radial von innen nach außen und von außen nach innen bewegbar sind, wie durch die Pfeile in der rechten Zeichnung der Fig. 5 angedeutet. Die Au-βenseiten der Segmente 31 bilden einen im wesentlichen kreisförmigen Umfang. Sie liegen an einem umlaufenden Expansionskörper 32 an, der sich dichtend an den Innenumfang der Öffnung des Reifens 1 anlegt. Durch die beweglichen Segmente 31 kann der Verschluß 30 stufenlos an verschiedene Öffnungsdurchmesser angepaßt werden.

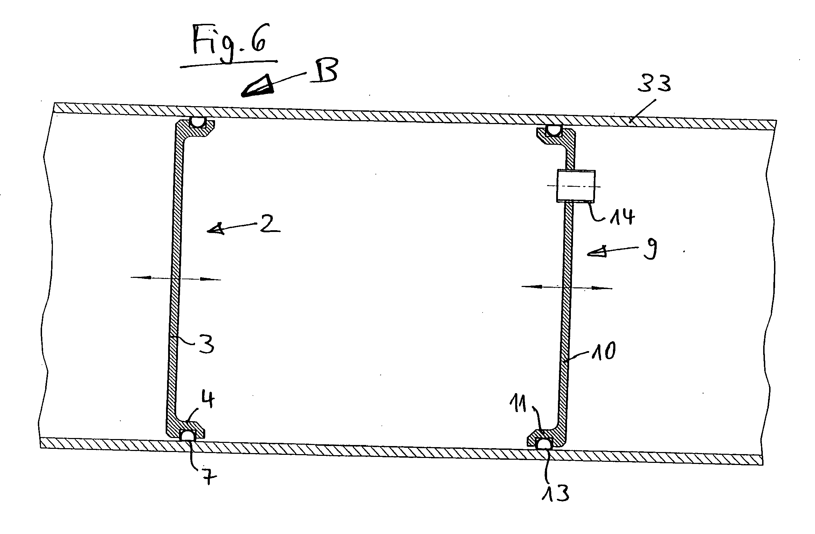

In Fig. 6 ist die Verwendung der Verschlüsse 2, 9 für die Prüfung eines Rohres 33 dargestellt. Die Verschlüsse 2, 9 werden im Abstand von den Öffnungen des Rohres 33 und im Abstand voneinander in das Rohr 33 eingesetzt und an der gewünschten Stelle positioniert. In den Hohlraum, der von den Verschlüssen 2 und 9 sowie vom zugehörigen Abschnitt des Rohres 33 begrenzt wird, kann ein Überdruck oder ein Unterdruck eingebracht werden. Wenn die Prüfung des Rohrabschnittes beendet ist, können die Verschlüsse 2, 9 verschoben werden, und ein anschließender oder sonstiger weiterer Bereich des Rohres 33 kann geprüft werden.

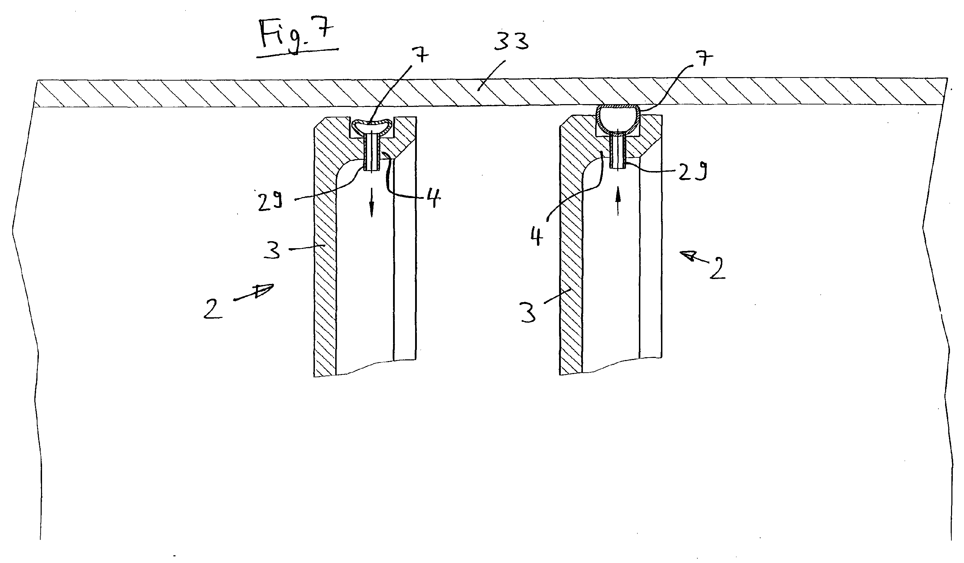

Fig. 7 zeigt in einer der Fig. 3 entsprechenden Darstellung, daß die umlaufenden Expansionskörper 7, 13 bei der Prüfung eines Rohres 33 in ähnlicher Weise verwendet werden können wie bei der in Fig. 3 gezeigten Prüfung eines Reifens.

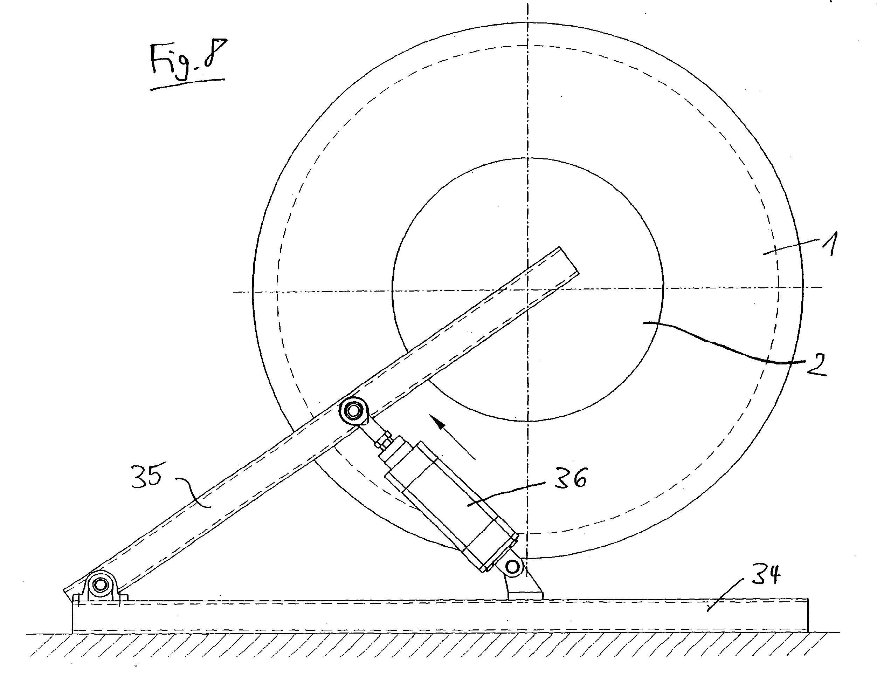

Fig. 8 zeigt eine Hebevorrichtung, die eine Konsole 34 und einen mit ihr schwenkbar verbundenen Rahmen 35 aufweist, der durch eine Kolben-Zylinder-Einheit 36, die sowohl mit der Konsole 34 als auch mit dem Rahmen 35 jeweils schwenkbar verbunden ist, aufgespreizt werden kann. Das Ende des Rahmens 35 ist mit den Verschlüssen 2, 9 verbunden. Die aus dem Reifen 1 und den Verschlüssen 2, 9 bestehende Einheit kann durch eine Schwenkbewegung des Rahmens 35 angehoben werden, so daß der Reifen 1 geprüft werden kann, ohne daß er teilweise auf dem Boden aufliegt und dadurch verformt wird.

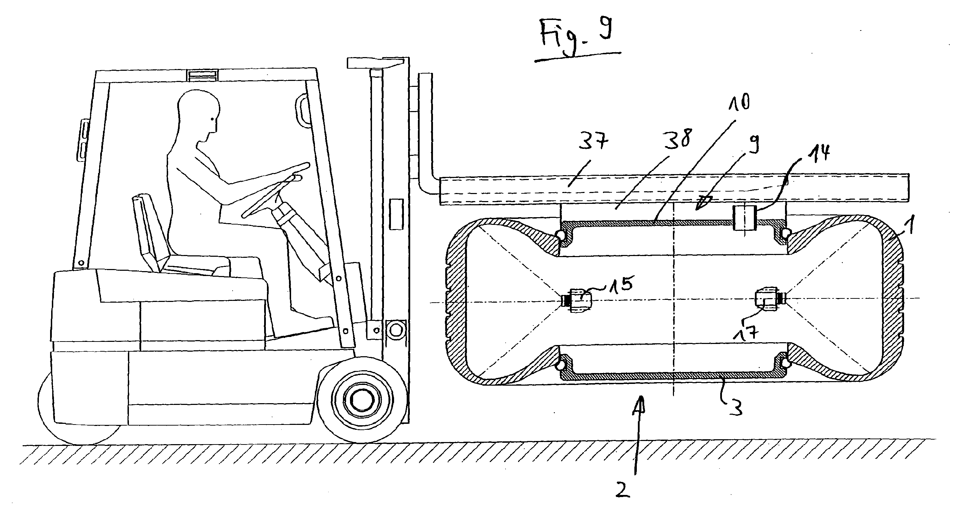

Fig. 9 zeigt eine abgewandelte Hebevorrichtung, die eine Palette 37 umfaßt, an der ein Flansch 38 befestigt ist, der mit dem Verschluß 9 verbunden ist. Die Palette 37 kann von den Gabeln eines Gabelstaplers ergriffen und angehoben werden, wodurch die aus dem Reifen 1 und den Verschlüssen 2 und 9 bestehende Einheit vom Boden abgehoben wird, so daß der Reifen 1 geprüft werden kann, ohne daß er teilweise auf dem Boden aufliegt und dadurch verformt wird.

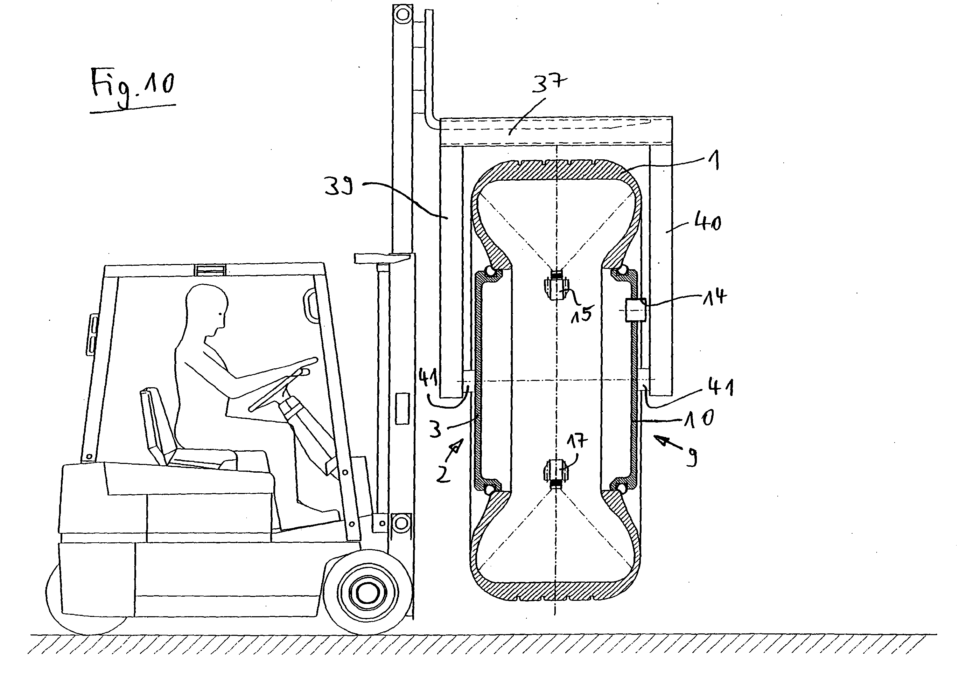

Fig. 10 zeigt eine abgewandelte Ausführungsform, bei der die Palette 37 mit zwei beabstandeten, im wesentlichen parallelen, nach unten verlaufenden Armen 39, 40 verbunden ist, deren untere Enden durch Verbindungsteile 41 jeweils mittig mit den plattenförmigen Teilen 3, 10 der Verschlüsse 2, 9 verbunden sind. Die Verbindungsteile können als Drehlager für die Verschlüsse 2, 9 ausgestaltet sein.

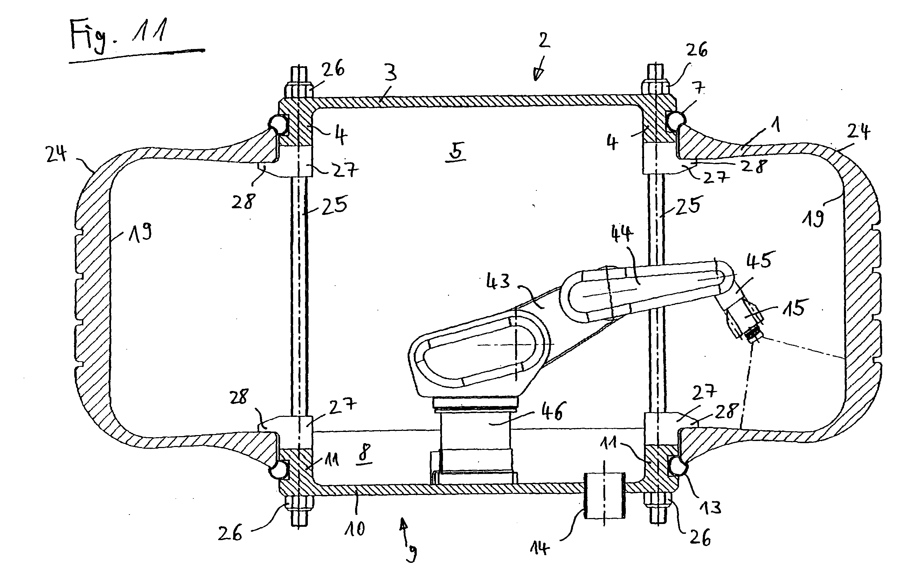

Bei der in Fig. 11 gezeigten Ausführungsform ist die als Laser-Meßkopf 15 ausgestaltete Prüfanordnung durch einen Positionierer positionierbar, nämlich durch einen Roboter 42, der einen ersten Roboterarm 43, einen zweiten Roboterarm 44 und einen dritten Roboterarm 45 aufweist, an dem der Meßkopf 15 montiert ist. Der erste Roboterarm 43 befindet sich an einer Säule 46, die mit dem plattenförmigen Teil 10 des unteren Verschlusses 9 verbunden ist.

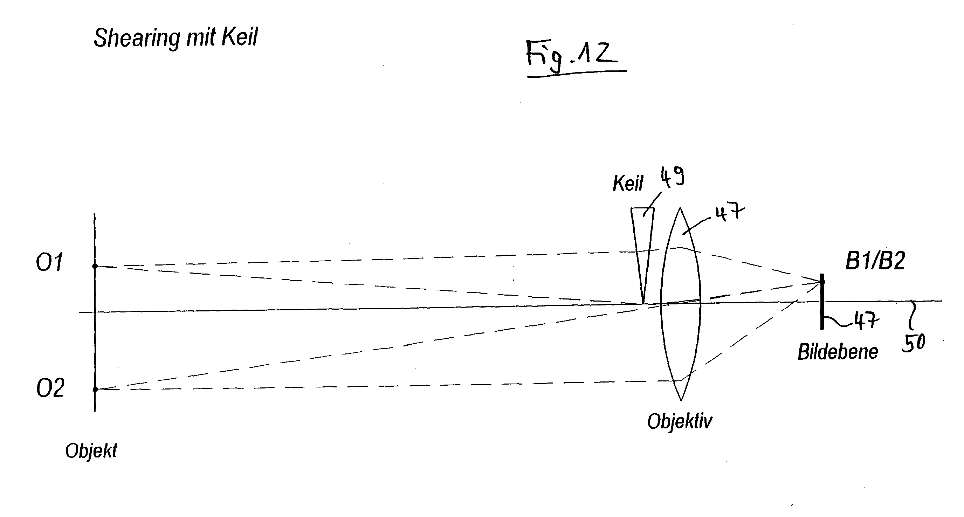

Die Prüfanordnungen bzw. Meßköpfe bzw. Lasermeßköpfe 15, 16, 17, 18 können nach verschiedenen Prinzipien arbeiten. Fig. 12 zeigt den grundsätzlichen Aufbau eines Meßkopfes, der nach dem Prinzip "Shearing mit Keil" arbeitet. Dabei werden die Punkte O1 und O2 des Objekts durch ein Objektiv 47 als Punkte B1, B2 in eine Bildebene 48 abgebildet. Vor dem Objektiv 47 befindet sich ein Keil 49, dessen Spitze auf der optischen Achse 50 liegt und der sich nach außen hin erweitert.

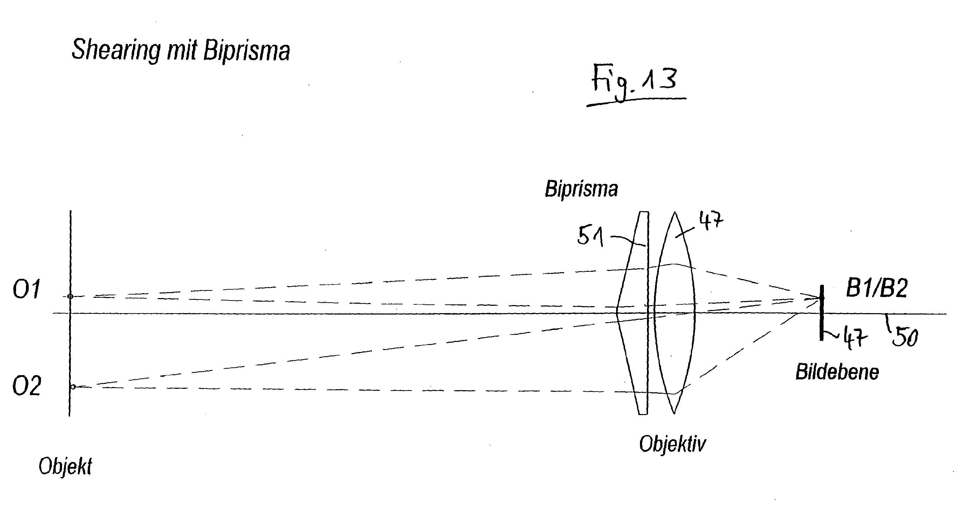

In Fig. 13 ist das Meßprinzip "Shearing mit Biprisma" dargestellt, bei dem sich in Abwandlung von Fig. 12 ein Biprisma 51 vor dem Objektiv 47 befindet. Das Biprisma 51 ist als dachförmiger Doppelkeil ausgebildet, wobei sich die Spitze des Daches, an der die Dicke des Biprismas 51 am größten ist, auf der optischen Achse 50 befindet. Die Stärke des Biprismas 51 nimmt von dort nach beiden Seiten hin ab.

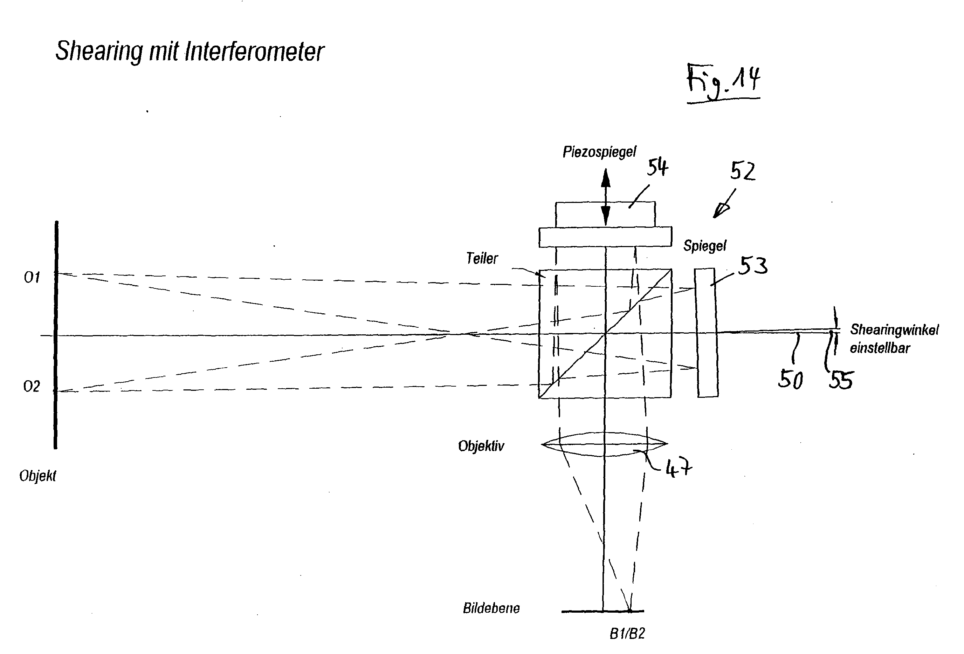

Fig. 14 zeigt das Meßprinzip "Shearing mit Interferometer", bei dem sich ein Interferometer (Michelson-Interferometer) im Strahlengang zwischen dem Objekt 01, 02 und dem Objektiv 47 befindet. Das Interferometer 52 umfaßt einen Spiegel 53 und einen rechtwinklig dazu angeordneten, verstellbaren Spiegel 54, der als Piezospiegel ausgebildet ist und der in Richtung des Doppelpfeils verstellbar ist. Auch der Shearingwinkel 55 zwischen der optischen Achse 50 und dem Spiegel 53 ist einstellbar.

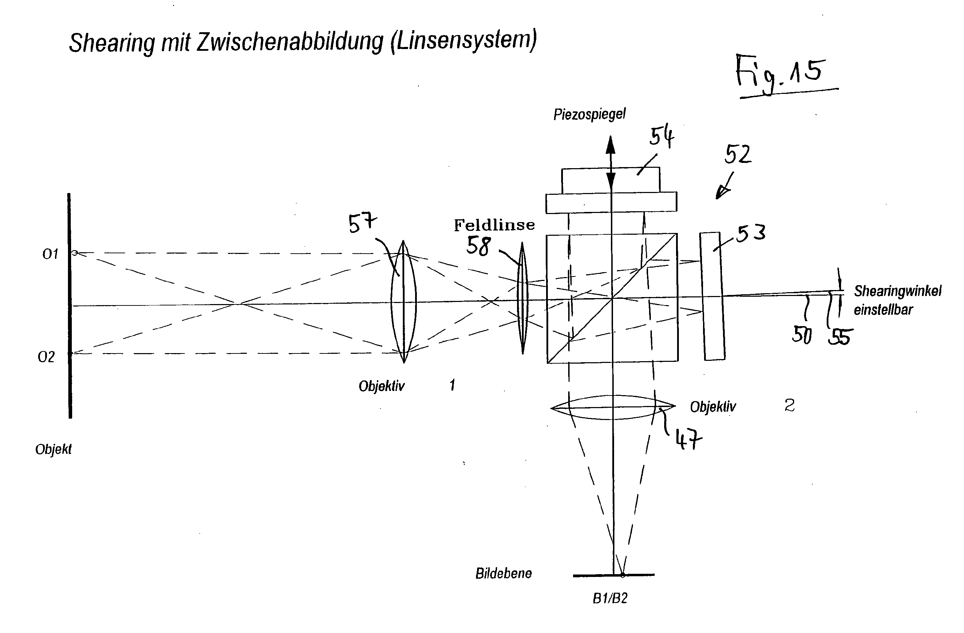

Fig. 15 zeigt das Meßprinzip "Shearing mit Zwischenabbildung (Linsensystem)", bei dem zusätzlich zu dem Bestandteil nach Fig. 14 noch ein zusätzliches Objektiv 57 und eine Feldlinse 58 zwischen dem Objekt 01, 02 und dem Interferometer 52 vorgesehen sind.

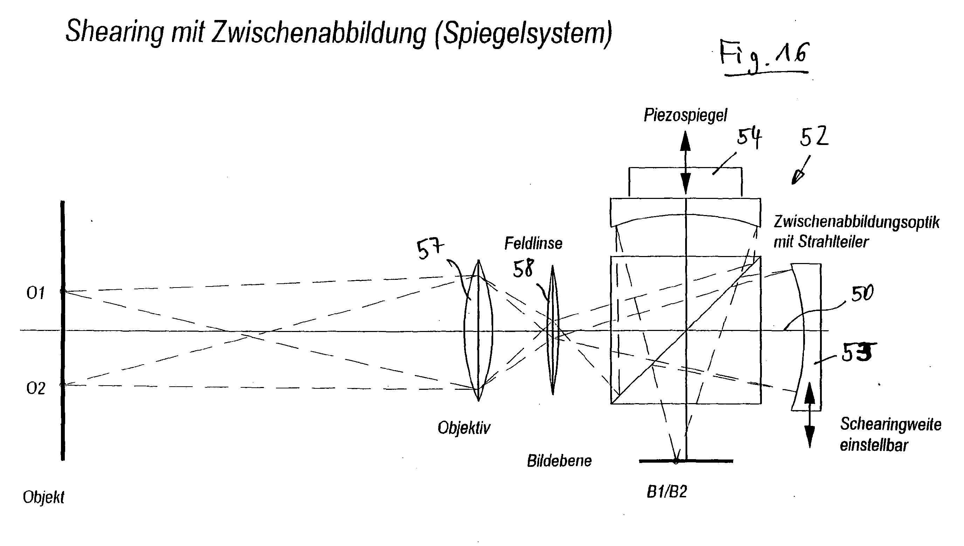

In Fig. 16 ist eine weitere Abwandlung gezeigt, die nach dem Meßprinzip "Shearing mit Zwischenabbildung (Spiegelsystem)" arbeitet. Gegenüber der Ausführungsform nach Fig. 16 fehlt hier das Objektiv 47. Die Spiegel 53 und 54 sind als sphärische Spiegel ausgebildet. Das System nach Fig. 16 weist eine Zwischenabbildungsoptik mit Strahlteiler auf. Der Spiegel 53 ist in einer Richtung senkrecht zur optischen Achse 50 verstellbar, wie durch den Doppelpfeil angedeutet.

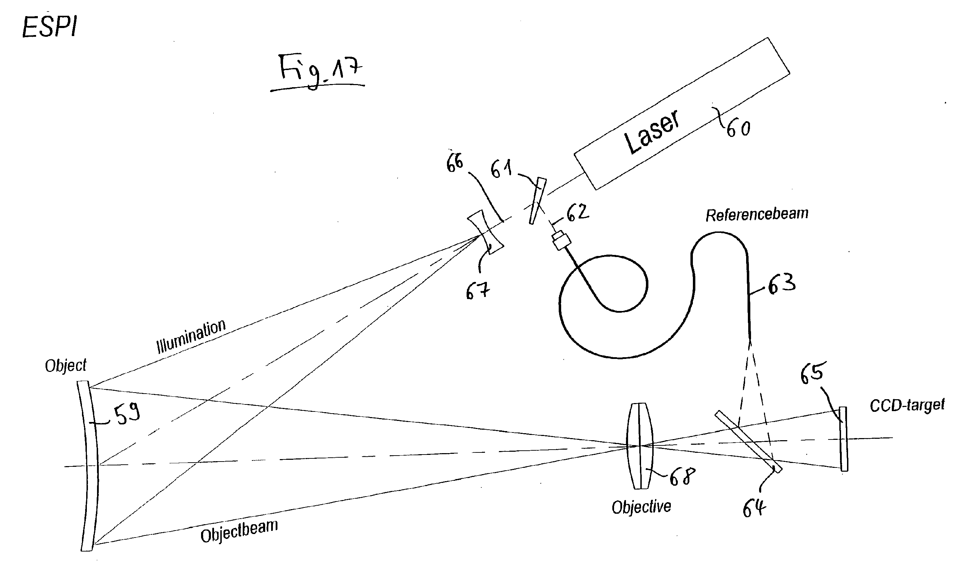

Fig. 17 zeigt eine Ausführungsform, die nach Prinzip "ESPI" arbeitet. Das Objekt 59 wird durch einen Laser 60 bestrahlt. Durch einen Strahlteiler 61 wird aus dem Laserstrahl 60 ein Referenzstrahl 62 ausgekoppelt, der durch eine flexible Leitung 63 und einen Spiegel 64 einem flächenhaften Sensor, insbesondere einem CCD-Sensor 65, zugeführt wird. Der durchgehende Laserstrahl 66 wird durch eine Zerstreuungslinse 67 aufgeweitet und auf das Objekt 59 gestrahlt.

Das vom Objekt 59 zurückgestrahlte Licht wird durch ein Objektiv 68 auf den CCD-Sensor 65 abgebildet. Im Strahlengang vom Objektiv 68 zum CCD-Sensor 65 befindet sich der erwähnte Spiegel 64. Durch die Überlagerung des Objektstrahls mit dem Referenzstrahl auf dem CCD-Sensor 65 kann die Prüfung der Oberfläche des Objekts 59 durchgeführt werden.

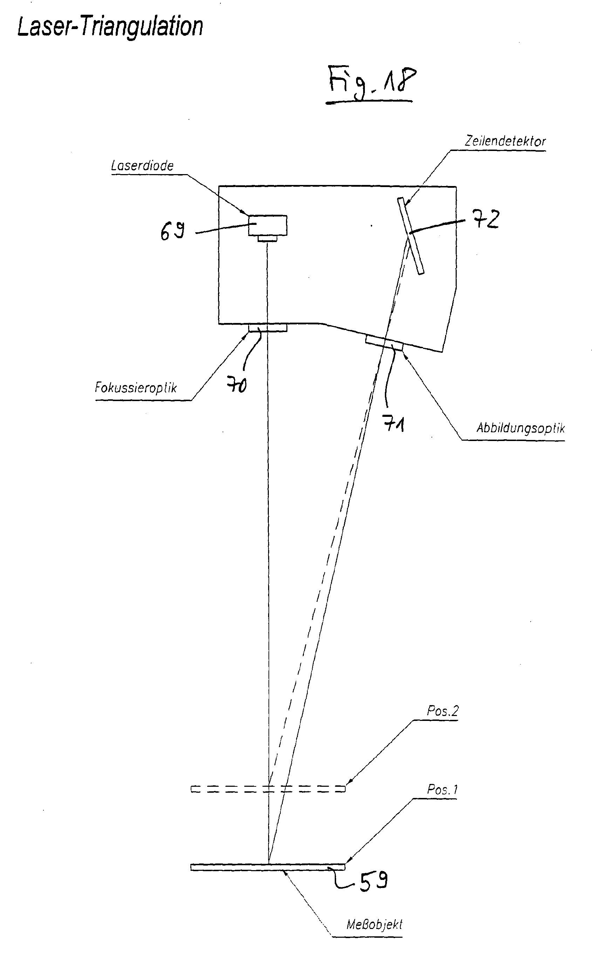

Fig. 18 zeigt eine Ausführungsform, die nach dem Prinzip der Laser-Triangulation arbeitet. Ein von einer Laserdiode 69 ausgehender Laserstrahl wird durch eine Fokussieroptik 70 auf das Meßobjekt 59 geworfen. Der von dort zurückgestrahlte Objektstrahl gelangt über eine Abbildungsoptik 71 auf einen Zeilendetektor 72.

Durch die Erfindung ist es möglich, Hohlkörper wie Reifen, Rohre oder Tanks oder Ähnliches mit Unterdruckbeaufschlagung und/oder Überdruckbeaufschlagung zu prüfen. Dies erfolgt mit einer Meßanordnung, die im Inneren des Prüflings angeordnet wird. Dabei wird die Meßanordnung durch eine gegebene Öffnung des Hohlköpers (z.B. Felgenloch oder Reifenloch oder Rohrende) eingeführt. Sämtliche gegebenen Öffnungen des Prüflings werden luftdicht verschlossen. Die Befestigung des Meßkopfes kann am Prüfling oder direkt an den Verschlüssen erfolgen oder ebenfalls luftdicht durch die Verschlüsse der gegebenen Öffnungen geführt werden. Damit dient der Hohlkörper selbst als Druckkammer oder Unterdruckkammer.

Die Meßanordnung kann auf einem interferometrischen Prinzip (Shearographie, ESPI oder ähnliches), einem Streifenprojektionsverfahren, Lasertriangulationsverfahren oder Speckle-Korrelationsverfahren beruhen.

Es können gleichzeit mehrere Meßanordnungen mit je einer oder mehreren Beleuchtungs- und Beobachtungseinheiten verwendet werden. Lange oder sehr lange Rohre können auch abschnittsweise mit Unterdruck oder Überdruck beaufschlagt werden, indem innen liegende Rohrverschlüsse im Rohr verschoben werden. Speziell bei Reifen ist es sinnvoll, die Verschlüsse der beiden Felgenlöcher mit einer starren Verbindung auszuführen, um eine Ganzkörperbewegung des Reifens in Folge der Druckänderung einzuschränken. Mittels dieser starren Verbindung können gleichzeitig die Felgenlöcher auseinandergespreizt werden, um eine bessere optische Zugänglichkeit der Reifeninnenseite zu erreichen.

Um beispielsweise schadhafte Klebeverbindungen (Delaminationen) zu detektieren, kann zur Belastung vorzugsweise eine Druckänderung unter den Umgebungsdruck gewählt werden. Dadurch werden eventuelle Ablösungen im Reifen besser sichtbar als bei Innendruck im Reifen.

Eventuelle Ganzkörperverformungen des Reifens in Folge der Druckänderung können während der Belastung rechnerisch eleminiert werden, so daß nur die fehlertypische Verformung im Ergebnisbild übrig bleibt. Dies kann nach dem Verfahren der DE 101 01 057 B4 erfolgen.

Die Meßanordnung kann so ausgelegt werden, daß sie gleichzeitig den Reifen vom Boden abhebt, beispielsweise durch seitliche Lagerung der Verschlüsse an Tragwerken, einem Kran oder Stapler oder Gabelstapler. Dadurch werden Druckstellen von der Auflage des Reifens, die das Prüfergebnis verfälschen könnten, vermieden. Dabei kann der Reifen liegend oder vorzugsweise stehend oder hängend geprüft werden.

Der durch Unterdruck oder Überdruck oder auf sonstige Weise verformte Reifen kann auch mit einer oder mehreren Meßanordnungen von außen beobachtet werden, insbesondere, wenn vor der Prüfung das Profil des Reifens entfernt wird, ein Vorgang, der in der Reifen-Runderneuerung ohnehin stattfindet. Neu ist hierbei im Vergleich zur DE 42 31 578 A1 die Unterdruckbeaufschlagung des Reifens sowie die Tatsache, daß er nicht auf einer Felge montiert ist, sondern durch Verschlüsse abgedichtet wird.

Zur Reifen- oder Meßkopfpositionierung können auch einer oder mehrere Roboter verwendet werden.

Vorzugsweise wird der Verschluß des Felgenlochs in einer auch für Unterdruck geeigneten Weise in Form einer Platte mit umlaufendem Expansionskörper (z.B. Gewebeschlauch) ausgebildet. Auf diese Weise kann der Schlauch gefüllt werden, sobald die Platte am Felgenloch angelegt wurde, wodurch die Platte am Reifen fixiert wird. Ein ähnliches Prinzip ist bei der Prüfung von Rohren möglich. Alternativ kann ein Verschluß nach dem Prinzip sogenannter Expansionsfelgen ausgestaltet werden. Alternativ kann der Verschluß auch durch am Umfang verteilte mechanische Klammern oder Bolzen befestigt werden.

## Patentansprüche

1. Prüfgerät für hohle Prüfobjekte (1, 33), insbesondere Reifen (1),
mit einem Verschluß (2, 9, 30) für jede Öffnung (5, 8) des Prüfobjekts (1, 33)
und einer Prüfanordnung (15, 16, 17, 18) im Inneren des Prüfobjekts (1, 33) zum Prüfen des Prüfobjekts (1, 33).

2. Prüfgerät nach Anspruch 1, **dadurch gekennzeichnet, daß** ein Verschluß (9) eine Durchführung (14) aufweist.

3. Prüfgerät nach Anspruch 1 oder 2, **dadurch gekennzeichnet, daß** eine oder mehrere oder alle Prüfanordnungen (15, 16, 17, 18) eine Beobachtungseinheit und/oder eine Beleuchtungseinheit aufweisen.

4. Prüfgerät nach einem der vorhergehenden Ansprüche, **dadurch gekennzeichnet, daß** der oder die Verschlüsse (2, 9, 30) einen umlaufenden Expansionskörper (7, 13) aufweisen.

5. Prüfgerät nach einem der vorhergehenden Ansprüche, **dadurch gekennzeichnet, daß** die Verschlüsse (2, 9, 30) in die Öffnungen (5, 8) eines Reifens (1) einsetzbar sind.

6. Prüfgerät nach einem der vorhergehenden Ansprüche, **dadurch gekennzeichnet, daß** die Verschlüsse (2, 9, 30) durch eine oder mehrere starre Verbindungen (25) miteinander verbunden sind.

7. Prüfgerät nach Anspruch 6, **dadurch gekennzeichnet, daß** der Abstand der Verschlüsse (2, 9, 30) veränderbar ist.

8. Prüfgerät nach einem der vorhergehenden Ansprüche, **dadurch gekennzeichnet, daß** der oder die Verschlüsse (2, 9) verschiedene Umfänge bzw. Durchmesser aufweisen.

9. Prüfgerät nach einem der vorhergehenden Ansprüche, **dadurch gekennzeichnet, daß** der Umfang bzw. Durchmesser des oder der Verschlüsse (30) veränderbar ist.

10. Prüfgerät nach einem der vorhergehenden Ansprüche, **dadurch gekennzeichnet, daß** die oder eine oder mehrere oder alle Prüfanordnungen (15, 16, 17, 18) in dem Prüfobjekt (1, 33) positionierbar sind.

11. Prüfgerät nach Anspruch 10, **dadurch gekennzeichnet, daß** die oder eine oder mehrere oder alle Prüfanordnungen (15, 16, 17, 18) durch einen Positionierer (42) positionierbar sind.

12. Prüfgerät nach einem der vorhergehenden Ansprüche, **gekennzeichnet durch** eine an einem Verschluß (2, 9, 30) angreifende Hebevorrichtung (35).

13. Prüfgerät nach einem der vorhergehenden Ansprüche, **gekennzeichnet durch** eine oder mehrere Prüfanordnungen (22, 23) außerhalb des Prüfobjekts (1, 33).
